# EUROPEAN PATENT APPLICATION

(11) **EP 3 812 195 A1**
(43) Date of publication of application: **28.04.2021**
(21) Application number: 19846315.0
(22) Date of filing: 28.06.2019
(51) Int. Cl.: B60L 9/00, B60M 1/36, B60L 5/42

(54) **ELECTRIC VEHICLE AND ROAD CONTACT POWER SUPPLY DEVICE FOR USE WITH SAME**

(30) Priority: 06.08.2018 CN 201810888255
(71) Applicant: Nanning Saixiansheng Technology Development Co., Ltd., Nanning, Guangxi 530023 (CN)
(72) Inventor: LU, Zhongyuan, Nanning, Guangxi 530023 (CN)
(74) Representative: V.O.
(86) International application number: PCT/CN2019/093817
(87) International publication number: WO 2020/029713

(57) **Abstract**

A trolley and a road contact power supply device in cooperative use with the trolley belong to the field of transportation. The trolley has a current collector mounted at a lower part thereof to receive power from a contact power supply device mounted on road surface. The current collector is composed of a contact slide plate (1), a first bent connecting rod (11) and a second bent connecting rod (16), where a flat thin strong magnet (5) is arranged on the contact slide plate (1). The road contact power supply device in cooperative use with the vehicle has a cable (32), a contact (46), a compression spring (26), an elastic sealing sleeve (34), a seal tube (38), a seal housing (39), a movable contact (41) and a fixed contact (49), where an upper end of the movable contact (41) is connected to a lantern ring (43) made of a ferromagnetic material, and an upper end of the lantern ring (43) is close to an upper surface of the contact (46). The contact power supply device has ultrahigh supply power, desirable universality, relatively low cost, ensured safety, and long service life. The device can be easily automatically produced, mounted and maintained and thus used for a long time on a large scale.

## Description

### TECHNICAL FIELD

The present disclosure relates to a trackless trolley system, in particular to a vehicle running in urban and rural high-grade highways, and belongs to the field of transportation.

### BACKGROUND

With increasing emission pollution and oil price, various battery electric vehicles are emergent on the market. Such vehicles, especially trolley buses and electric trucks can be produced and used only on a small scale because of short service life, high cost and short one charge distance range of batteries. Traditional trackless trolleys have no emission and use cost-effective grid power, but have poor maneuverability and universality although they have been improved. Especially, various small vehicles cannot be transformed to electric vehicles. Besides, the overhead power supply network badly affects the road landscape. To solve the above problems, related researches have been made. It is preliminarily found that there has been a differential electrified highway model or solution, i.e., electric vehicles which can be directly driven by grid power, in China, the United States, Germany, Korea, Sweden, New Zealand and Hong Kong. It also includes the unique solution of contact sliding power receiving at the bottom of an electric vehicle, namely the inventor's previous patent applications "TRACKLESS TROLLEY AND ROAD POWER SUPPLY LEAD THEREOF" (application No. CN200910114531.2, CN200920164795.4). Such electrified highway solutions have such defects as low supply power, poor universality, excessively high cost and poor reliability, and cannot meet the technical requirement of large-scale promotion.

### SUMMARY

The present disclosure provides a technical solution entitled "TROLLEY AND ROAD CONTACT POWER SUPPLY DEVICE IN COOPERATIVE USE THEREWITH", which is a great improvement and innovation on the basis of "a trackless trolley and a road power supply lead thereof' described above. The technical solution includes: 1, a trolley having a contact slide plate of a current collector mounted at a lower part thereof to receive power from a road contact power supply device, where a flat thin strong magnet is arranged on the contact slide plate; and 2, a road contact power supply device in cooperative use with the trolley, the device including a cable, a contact, a movable contact and a fixed contact, where an upper end of the movable contact is connected to a lantern ring made of a ferromagnetic material. When the contact slide plate comes into contact with positive and negative contacts simultaneously, the lantern ring will be attracted upwards by the magnetic force of the flat thin magnet, so that the movable contact and the fixed contact are closed to switch on power to drive the trolley. When the contact slide plates are not in contact with the positive and negative contacts, the movable contact and the fixed contact are separated to switch off power. The contacts will not cause human and animals to get an electric shock and can bear pressure applied by vehicles and human and withstand the weather for a long time.

The technical solution of the present disclosure has prominent advantages: the road contact power supply device has ultrahigh supply power to meet the demand of simultaneous power utilization by a large number of various electric vehicles on the same road desirable universality, relatively low cost, ensured safety, and long service life. The device can be easily automatically produced, mounted and maintained and thus applied for a long time on a large scale.

### BRIEF DESCRIPTION OF THE DRAWINGS

The accompanying drawings for one embodiment are described blow.
FIG. 1 is an assembly diagram of a current collector mounted at a lower part of a trolley bus, which is a sectional view of FIG. 3 taken along B-B on a scale of 1:7 and further includes four partially enlarged views that are not numbered additionally.
FIG. 2 is a relationship diagram of the current collector when used in combination with a road contact power supply device on a scale of 1:7.
FIG. 3 is a sectional assembly diagram of FIG. 1 taken along A-A on a scale of 1:7.
FIG. 4 is a partial view of FIG. 1 taken along direction A, which is a bottom view of the bottom plane of the current collector on a scale of 1:7.
FIG. 5 is an assembly diagram of one contact unit on a scale of 1:1. A plurality of contact units on a single segment of cable and the cable are called a lead. As can be seen from FIG. 3, a pair of parallel leads are a positive lead and a negative lead if direct current is applied and are a live lead and a null lead if alternating current is applied.
FIG. 6 is a partially enlarged view of FIG. 5 on a scale of 2.8:1.
FIG. 7 is a cross sectional view of an overall fixing sleeve part for a lead, which is a sectional view of FIG. 8 taken along C-C on a scale of 1:1. The fixing sleeve can be used to fix a lead as a whole, thus facilitating production, transportation, and mounting and dismounting.
FIG. 8 is a view of FIG. 7 taken along direction B on a scale of 1:1.
FIG. 9 is an assembly diagram of a cable connector for front and back adjacent leads on a scale of 1:1.

### DETAILED DESCRIPTION

An embodiment of the present disclosure provides a trolley and a road contact power supply device in cooperative use with the trolley.

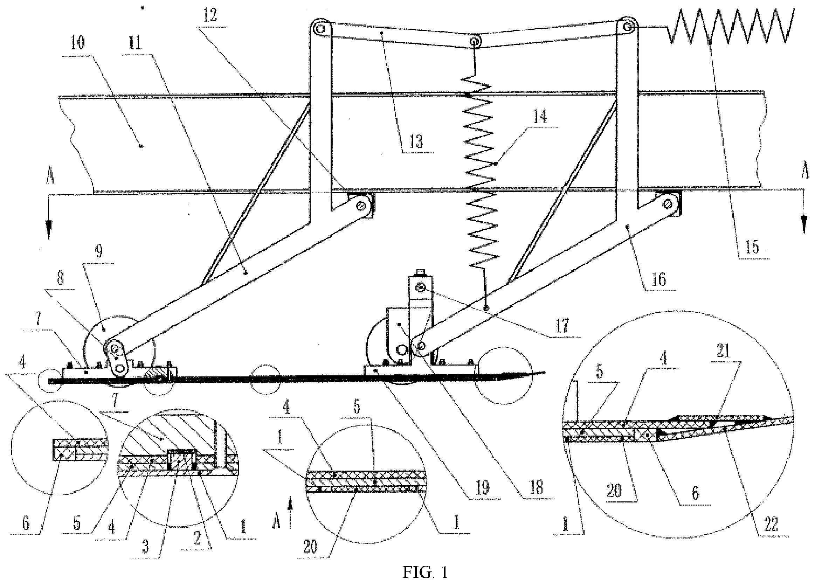

As shown in FIG. 1, FIG. 2, FIG. 3 and FIG. 4, a trolley directly driven by grid power has a current collector mounted at a lower part thereof to receive power from a contact power supply device mounted on road surface (62).The current collector is composed of a contact slide plate (1), a first bent connecting rod (11), a second bent connecting rod (16), a first hinge mount (7) and a second hinge mount (19), where a flat thin strong magnet (5) is arranged on the contact slide plate (1). The flat thin strong magnet (5) is capable of closing a circuit switch connected to a contact (46) for contacting the contact slide plate (1) so as to close the circuit. The contact slide plate (1) plays an important protective role for the flat thin strong magnet (5), so that the magnet is kept at a low temperature and not prone to reduction of magnetic force, falling out and wearing. The contact slide plate (1) is an electrically conductive plate allowing magnetic lines of force to pass through or incapable of shielding magnetic lines of force, for example, an aluminum alloy sheet.

As can be seen from FIG. 1, the above-described trolley has an upper flat plate (4) configured to fix the contact slide plate (1) and the flat thin strong magnet (5). The flat thin strong magnet (5) is sandwiched between the upper flat plate (4) and the contact slide plate (1). The first hinge mount (7) and the second hinge mount (19) are arranged on the upper flat plate (4). The contact slide plate (1) is connected to a conductive contact (3). The conductive contact (3) is held down by a rubber block (2) on the contact slide plate (1). The conductive contact (3) is connected to a power battery or a driving motor (not shown in the figure) in the vehicle by means of an electric wire. Such a structure provides further protection for the flat thin strong magnet (5) for long-term use. To ensure that the contact slide plate (1) does not come into contact with the road surface (62) when being separated from the lead, a pair of fixed axis wheels (9), a pair of universal wheels (18) and a universal wheel seat (17) are arranged on the upper flat plate (4). The upper flat plate (4) is connected to an inclined panel (22) and a reinforcement plate (21) thereof, which can protect the current collector and significantly reduce the impact force that may act upon the contact (46) ahead in a traveling direction.

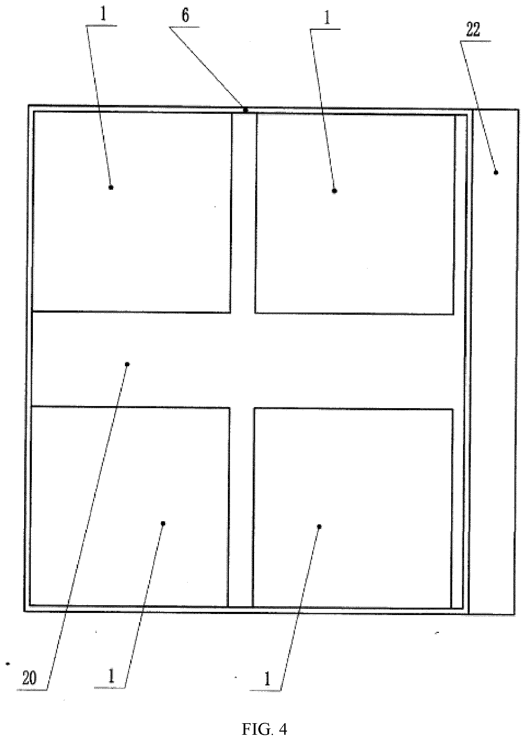

As can be seen from FIG. 1, FIG. 3 and FIG. 4, according to the above-described trolley, a separator (20) is arranged beside the contact slide plate (1). A bottom surface of the separator (20) is coplanar with a bottom surface of the contact slide plate (1). At least a pair of, namely two contact slide plates (1) are used, which are separated and insulated by part of the separator (20). A pair of contact slide plates (1) may slide and come into contact with a positive lead and a negative lead, respectively. To avoid short circuit, a pair of contact slide plates (1) may be separated and insulated by the separator (20). Each contact slide plate (1) should be approximately sized in bottom surface, and it is required that the bottom surface cannot come into contact with the contacts (46) of two different electrodes on a pair of positive lead and a negative lead, especially at an intersection. Therefore, in this embodiment, two adjacent contacts (46) of different electrodes have a center-to-center distance of 620 mm, and two adjacent contacts (46) of one electrode have a center-to-center distance of 400 mm. The bottom surface of one contact slide plate (1) is square with a length of side of 420 mm. For a trolley having only one driving motor system, the current collector thereof only needs a pair of contact slide plates (1) of opposite poles. To obtain doubled power, as shown in FIG. 4, two pair of, namely four contact slide plates (1) are used in this embodiment, corresponding to two driving motor systems on the vehicle. Each system is independently electrified by a pair of contact slide plates (1) connected thereto coming into contact with the positive lead and the negative lead, respectively. Apparently, the number of pairs of contact slide plates (1) is equal to the number of independent driving motor systems. the number of pairs of contact slide plates (1) is directly proportionally to the maximum power that can be transmitted to the power.

As can be seen from FIG. 1, FIG. 3 and FIG. 4, according to the above-described trolley, edge strips (6) for preventing electric arc and protecting the flat thin strong magnet (5) are connected to the upper flat plate (4) under four edges thereof. The bottom surfaces of the edge strips (6) are coplanar with the bottom surfaces of the contact slide plates (1). In this embodiment, the combined bottom surface formed by the edge strips (6), the separator (20) and the contact slide plates (1) has a designed size of 1064 mm*942 mm. When the vehicle operates with grid power, the combined bottom surface generally can come into contact with at least two pairs of, four contacts (46) of different electrodes simultaneously. This is one of important conditions for little shake of the combined bottom surface during operating.

As can be seen from FIG. 1, FIG. 2 and FIG. 3, the flat thin strong magnet (5) is arranged on the contact slide plate (1) of the current collector of the trolley, and the trolley further has a short connecting rod (8), a pair of hinged pull rods (13), a lower spring (14) and an upper spring (15). The first bent connecting rod (11), the short connecting rod (8) and the first hinge mount (7) are orderly hinged to one another. The pair of hinged pull rods (13) are hinged to an upper end of the first bent connecting rod (11) and an upper end of the second bent connecting rod (16), respectively. The middle parts of the pair of hinged pull rods (13) are acted upon by a downward tensile force applied by the lower spring (14), and the upper end of the second bent connecting rod (16) is acted upon by a horizontal tensile force applied by the upper spring (15). The advantage of such a structure is that the pressure of the contact slide plate (1) on the contact (46) during operating is still within a suitable range at different loads of vehicles and different heights and different degrees of inclination of chassis as long as the lower spring (14) and the upper spring (15) are designed appropriately. The upper spring (15) is connected to one of a special purpose gas pump, an oil pump and an electric pull rod on the vehicle, and a corresponding switch in the driver's cab of the vehicle can be manipulated to change the tensile force of the upper spring (15), thereby controlling the contact slide plate (1) to go up and down. In addition, the first bent connecting rod (11) and the second bent connecting rod (16) are hinged to connecting rod holders (12), respectively. The connecting rod holders (12) are fixed to a longitudinal beam (10) of the vehicle. A first cross rod (24) and a second cross rod (23) are hinged to the lower ends of a pair of first bent connecting rods (11) and the lower ends of a pair of second bent connecting rods (16), respectively.

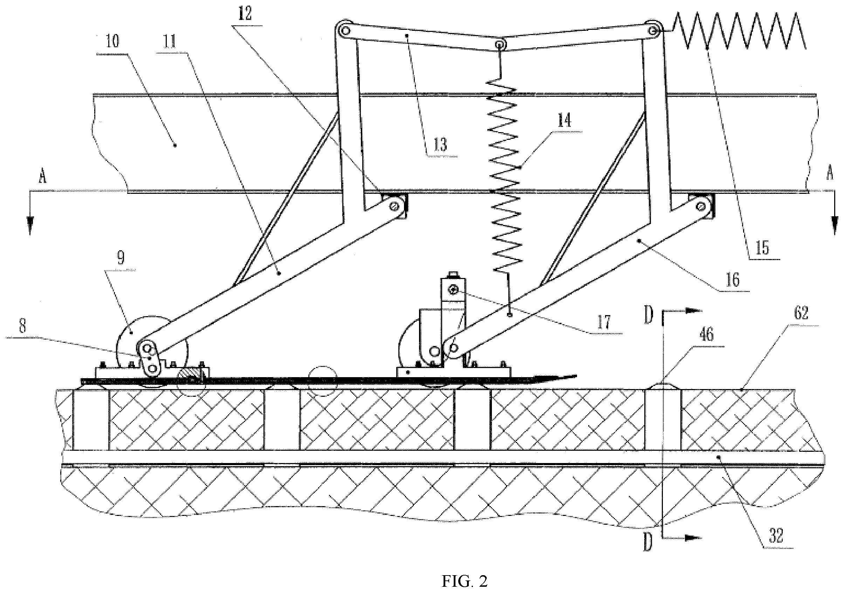

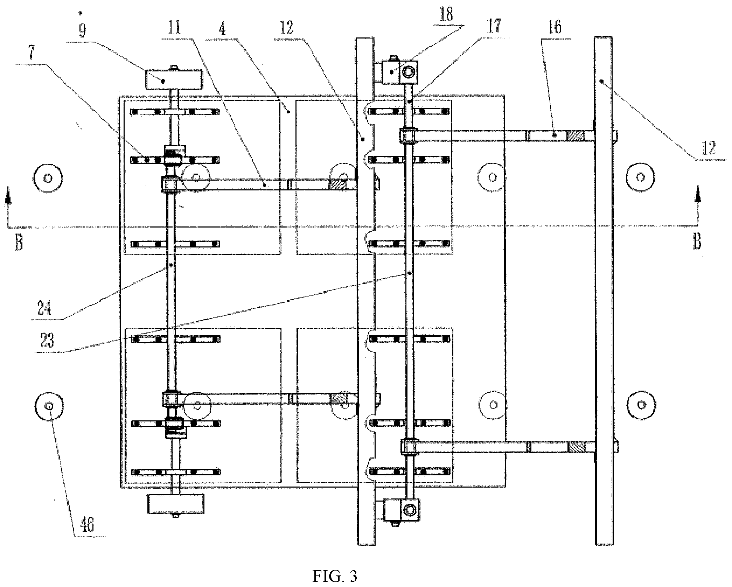

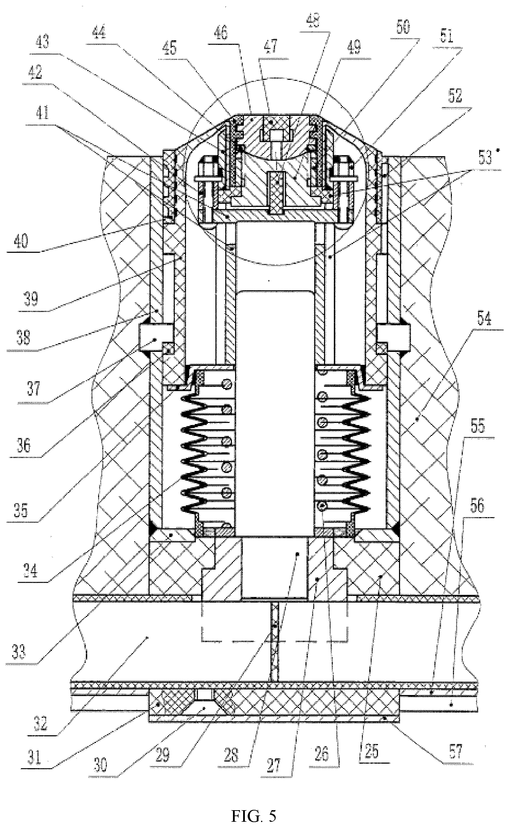

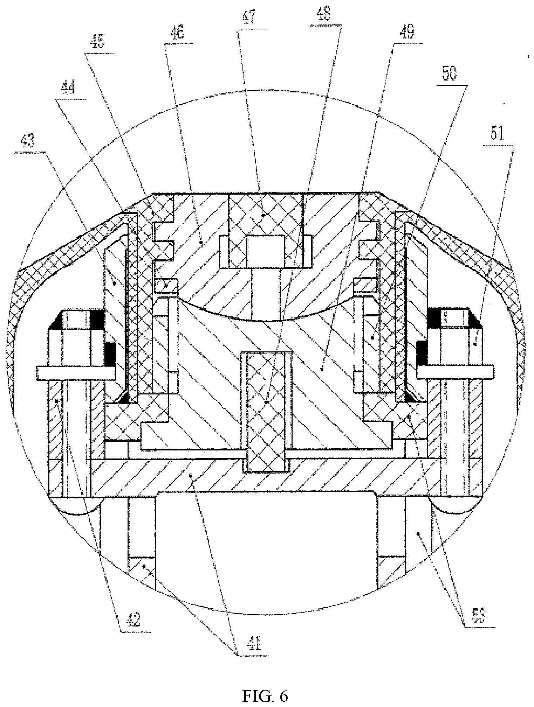

As can be seen from FIG. 5 and FIG. 6, a road contact power supply device for cooperative use with a trolley having a flat thin strong magnet (5) on a contact slide plate (1) includes a cable (32), a contact (46), a seal tube (38), and a seal housing (39), a movable contact (41) and a fixed contact (49) that are located within the seal tube (38), where an upper end of the movable contact (41) is connected to a lantern ring (43) made of a ferromagnetic material, and an upper end of the lantern ring (43) is close to an upper surface of the contact (46). As shown in FIG. 5 and FIG. 2, the flat thin strong magnet (5) on the contact slide plate (1) of the current collector of the vehicle allows the movable contact (41) under the contact (46) for contacting the contact slide plate (1) to be closed with the fixed contact (49) so as to close the circuit. When the contact slide plate (1) leaves the contact (46), the magnetic force acting upon on the lower side of the contact (46) disappears, and the movable contact (41) is separated from the fixed contact (49) under the action of gravity and an insulating rubber column (48), thereby opening the circuit. Thus, all the contacts (46) that are not under the contact slide plate (1) are not electrified, thereby ensuring the safety of human and animals on the road. The positive lead and the negative lead shown in FIG. 3 are coupled with a positive output terminal and a negative output terminal of a power grid transformer rectifier installed by the road, respectively. The movable contact (41) and the lantern ring (43) are fixedly connected by a group of bolts (51) and a pad sleeve (42).

As can be seen from FIG. 5 and FIG. 6, according to the above-described road contact power supply device, an elastic sealing sleeve (34), a compression spring (26), a fixed contact carrier (53) and a pedestal (35) are arranged in the seal tube (38). At least one of the elastic sealing sleeve (34) and the compression spring (26) supports the pedestal (35). The movable contact (41) is shaped like a sleeve cover. The pedestal (35) props up the seal housing (39), the fixed contact carrier (53) and the movable contact (41). A large rubber ring (40) for sealing is arranged between the seal housing (39) and the seal tube (38). The large rubber ring (40) has a capping groove (52) for water drainage. The inner wall of the large rubber ring (40) is fixed to the outer wall of the seal housing (39). As long as an appropriate material is selected, such a reasonably sized structure is long in service life. The contact (46) will retract into the ground without damage when acted upon by pressure applied by vehicles and human, and can withstand the weather for a long time. When the contact (46) retracts into the ground under pressure, part of dust and moisture that may get into the sealed surface can be discharged to the ground under the action of the 22 mm wide large rubber ring (40) having an outer wall in the form of several sawtooth sections. To enhance the strength of the seal tube (38), the seal tube (38) is fixedly connected to a tube socket (33).

As can be seen from FIG. 5 and FIG. 6, according to the above-described road contact power supply device, the fixed contact carrier (53) and a conductive column (28) are arranged in the seal housing (39). The seal housing (39), a head end of the fixed contact carrier (53), the fixed contact (49), the elastic sealing sleeve (34) and the conductive column (28) define a gas-tight space which is filled with an inert gas. Thus, the metal parts, especially the contact surfaces of the movable contact (41) and the fixed contact (49), in the space can be protected against oxidation for a long time, thereby ensuring that electrical conduction is not affected. The insert gas in this embodiment is easily available nitrogen. The fixed contact carrier (53) and the fixed contact (49) are fixedly connected by an internal thread sleeve (50).

As can be seen from FIG. 5, according to the above-described road contact power supply device, an electrical contact (27), an upper cable clamp (25), a lower cable clamp (31) and the cable (32) are arranged below the conductive column (28). The conductive column (28) is connected to the surface of a core wire of the cable (32) through the electrical contact (27). The conductive column (28) is in movable fit with the sleeve cover-shaped movable contact (41) for electrical conduction. As long as the tolerance of the movable fit is designed reasonably, the resistance of the circuit formed by the conductive column (28) and the movable contact (41) connected together will be kept as small as an ideal value for a long time without affecting the up and down on-off actions of the movable contact (41). In addition, a conductive paste (29), a clamping screw (30) and a locating clip (37) are further used. A cushion (36) and an escape groove (not shown in the figure) formed in the outer wall of the seal housing (39) are located below the locating clip (37). The locating clip (37) passes through the escape groove when the seal housing (39) is mounted and dismounted.

As can be seen from FIG. 5 and FIG. 6, according to the road contact power supply device, the upper end of the movable contact (41) is connected to the lantern ring (43) made of the ferromagnetic material, and the upper end of the lantern ring (43) is close to the upper surface of the contact (46), where the fixed contact (49) is in spherical contact with the contact (46). An elastic insulating sealing ring (45) is connected to the periphery of the contact (46). An upper end of the elastic insulating sealing ring (45) is in a shape of an annular plane which is coplanar with an upper end face of the contact (46). When the contact slide plate (1) slides on and comes into contact with the contact (46), the annular plane is coplanar with three bottom surfaces of the edge strips (6), the contact slide plate (1) and the separator (20), so that there is very little ionizable air around at the moment of the beginning of separation and reunion of the contact slide plate (1) and the contact (46), resulting in not easy formation of relatively obvious electric arc there. In addition, a conductive rubber hole sealing cover (47) is arranged in the middle of the contact (46). The hole sealing cover (47) is configured to seal an air hole thereunder. Thus, it may be easy to install the contact (46) satisfactorily. After the hole sealing cover (47) is installed in place, the hole sealing cover (47) is pierced by a thin hollow needle, so that the contact (46) is in good contact with the fixed contact (49) because the pressure at the contact interface therebetween is the same as the outside atmospheric pressure. When dismounting, the hole sealing cover (47) is pulled out, and the relatively vulnerable part contact (46) together with the sealing ring (45) is raked out by means of a step in the air hole.

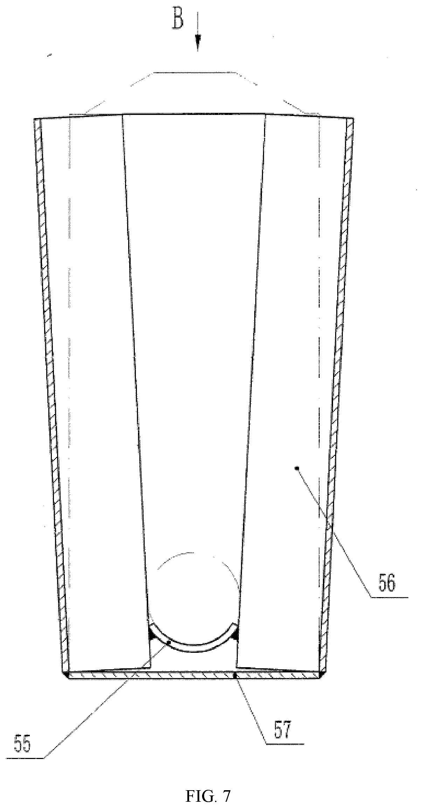

As shown in FIG. 5, FIG. 7 and FIG. 8, an edge plate (56), a cable socket (55) and a bottom plate (57) are welded to form a fixing sleeve for fixing a lead as a whole. Different parts of an integrated lead include concrete blocks (54) as shown in FIG. 5, which are spaced apart by polyethylene films to be dismounted easily. The integrated lead so formed facilitates mass production, transportation, and mounting and dismounting on the road.

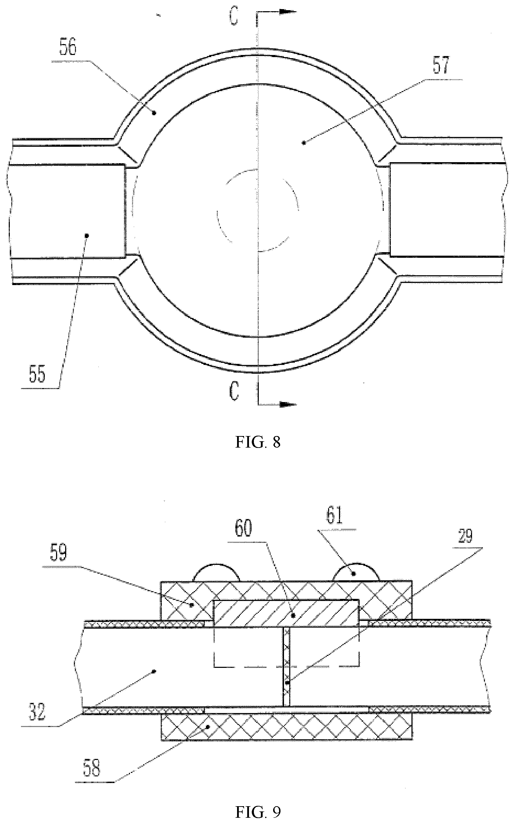

As shown in FIG. 9, a connector for the cables (32) of front and back adjacent leads is composed of a lower clamp (58), an upper clamp (59), a core clamp (60) and a screw (61).

The operating principle of the embodiment is briefly described below: as shown in FIG. 1, FIG. 2, FIG. 3, FIG. 5 and FIG. 6, when the contact slide plate (1) of the trolley comes into contact with the contact (46), the magnetic force of the flat thin strong magnet (5) will attract the corresponding lantern ring (43) upwards, so that the corresponding movable contact (41) and fixed contact (49) are closed. In this case, the current can pass from the positive lead through a load of the vehicle to the negative lead, which passes through conductive parts such as the contact slide plate (1), the conductive contact (3) and the electric wire (not shown in the figure). When the contact (46) leaves the contact slide plate (1) relatively, the magnetic force disappears, and the corresponding movable contact (41) and fixed contact (49) are separated. As a result, the above-described current does not exist without causing human and animals to get an electric shock. The contact (46) can bear pressure applied by vehicles and human and withstand the weather for a long time.

To avoid electrochemical corrosion, it may be best to make the cable (32), the electrical contact (27), the conductive column (28), the movable contact (41), the fixed contact (49) and the contact (46) with the same conductive metal. For stable operation of the contact slide plate (1), its pressure acting upon the contact (46) should be smaller than the minimum force that can cause the contact (46) to retract downwards. As shown in FIG. 5 and FIG. 6, a washer (44) is arranged under the contact (46). In this embodiment, the cable core is a specially made round aluminum bar core which has a length different from that of the above-described fixing sleeve to facilitate industrialized automatic production of the above-described integrated lead. The first lead sample designed in this way can be applied with a direct current voltage of 800 V with a safe current carrying capacity of 2000 A.

## Claims

1. A trolley directly driven by grid power, having a current collector mounted at a lower part thereof to receive power from a contact power supply device mounted on road surface, wherein the current collector is composed of a contact slide plate (1), a first bent connecting rod (11), a second bent connecting rod (16), a first hinge mount (7) and a second hinge mount (19), wherein a flat thin strong magnet (5) is arranged on the contact slide plate (1).

2. The trolley according to claim 1, having an upper flat plate (4) configured to fix the contact slide plate (1) and the flat thin strong magnet (5), wherein the flat thin strong magnet (5) is sandwiched between the upper flat plate (4) and the contact slide plate (1); the first hinge mount (7) and the second hinge mount (19) are arranged on the upper flat plate (4); and the contact slide plate (1) is connected to a conductive contact (3).

3. The trolley according to claim 2, wherein a separator (20) is arranged beside the contact slide plate (1); a bottom surface of the separator (20) is coplanar with a bottom surface of the contact slide plate (1); at least a pair of, namely two contact slide plates (1) are used, which are separated and insulated by part of the separator (20).

4. The trolley according to claim 3, wherein edge strips (6) for preventing electric arc and protecting the flat thin strong magnet (5) are connected to the upper flat plate (4) under four edges thereof; and bottom surfaces of the edge strips (6) are coplanar with the bottom surfaces of the contact slide plates (1).

5. The trolley according to claim 1, having a short connecting rod (8), a pair of hinged pull rods (13), a lower spring (14) and an upper spring (15), wherein the first bent connecting rod (11), the short connecting rod (8) and the first hinge mount (7) are orderly hinged to one another; the pair of hinged pull rods (13) are hinged to an upper end of the first bent connecting rod (11) and an upper end of the second bent connecting rod (16), respectively; the middle parts of the pair of hinged pull rods (13) are acted upon by a downward tensile force applied by the lower spring (14); and the upper end of the second bent connecting rod (16) is acted upon by a horizontal tensile force applied by the upper spring (15).

6. A road contact power supply device in cooperative use with the trolley according to claim 1, the device comprising a cable (32), a contact (46), a seal tube (38), and a seal housing (39), a movable contact (41) and a fixed contact (49) that are located within the seal tube (38), wherein an upper end of the movable contact (41) is connected to a lantern ring (43) made of a ferromagnetic material; and an upper end of the lantern ring (43) is close to an upper surface of the contact (46).

7. The road contact power supply device according to claim 6, wherein an elastic sealing sleeve (34), a compression spring (26), a fixed contact carrier (53) and a pedestal (35) are arranged in the seal tube (38); at least one of the elastic sealing sleeve (34) and the compression spring (26) supports the pedestal (35); the movable contact (41) is shaped like a sleeve cover; the pedestal (35) props up the seal housing (39), the fixed contact carrier (53) and the movable contact (41); a large rubber ring (40) for sealing is arranged between the seal housing (39) and the seal tube (38); and an inner wall of the large rubber ring (40) is fixed to an outer wall of the seal housing (39).

8. The road contact power supply device according to claim 7, wherein the fixed contact carrier (53), a conductive column (28) and a base (31) are arranged in the seal housing (39); and the seal housing (39), a head end of the fixed contact carrier (53), the fixed contact (49), the elastic sealing sleeve (34), the conductive column (28) and the base (31) define a gas-tight space which is filled with an inert gas.

9. The road contact power supply device according to claim 8, wherein an electrical contact (27), an upper cable clamp (25), a lower cable clamp (31) and the cable (32) are arranged below the conductive column (28); the conductive column (28) is connected to the surface of a core wire of the cable (32) through the electrical contact (27); and the conductive column (28) is in movable fit with the sleeve cover-shaped movable contact (41) for electrical conduction.

10. The road contact power supply device according to claim 1, wherein the fixed contact (49) is in spherical contact with the contact (46); an elastic insulating sealing ring (45) is connected to the periphery of the contact (46); an upper end of the elastic insulating sealing ring (45) is in a shape of an annular plane which is coplanar with an upper end face of the contact (46).

## Amended claims

### Amended claims under Art. 19.1 PCT

1. A trolley and a road contact power supply device in cooperative use with the trolley, the trolley having a current collector mounted at a lower part thereof, wherein the current collector is composed of a contact slide plate (1), a first bent connecting rod (11), a second bent connecting rod (16), a first hinge mount (7) and a second hinge mount (19), wherein a flat thin strong magnet (5) is arranged on the contact slide plate (1); and the trolley further having an upper flat plate (4) configured to fix the contact slide plate (1) and the flat thin strong magnet (5), wherein the flat thin strong magnet (5) is sandwiched between the upper flat plate (4) and the contact slide plate (1); the first hinge mount (7) and the second hinge mount (19) are arranged on the upper flat plate (4); the contact slide plate (1) is connected to a conductive contact (3); and edge strips (6) for preventing electric arc and protecting the flat thin strong magnet (5) are connected to the upper flat plate (4) under four edges thereof

2. The trolley according to claim 1, wherein a separator (20) is arranged beside the contact slide plate (1); a bottom surface of the separator (20) is coplanar with a bottom surface of the contact slide plate (1); at least a pair of, namely two contact slide plates (1) are used, which are separated and insulated by part of the separator (20).

3. The trolley according to claim 1, having a short connecting rod (8), a pair of hinged pull rods (13), a lower spring (14) and an upper spring (15), wherein the first bent connecting rod (11), the short connecting rod (8) and the first hinge mount (7) are orderly hinged to one another; the pair of hinged pull rods (13) are hinged to an upper end of the first bent connecting rod (11) and an upper end of the second bent connecting rod (16), respectively; the middle parts of the pair of hinged pull rods (13) are acted upon by a downward tensile force applied by the lower spring (14); and the upper end of the second bent connecting rod (16) is acted upon by a horizontal tensile force applied by the upper spring (15).

4. The trolley according to claim 1, having the road contact power supply device in cooperative use therewith, the device comprising a cable (32), a contact (46), a seal tube (38), and a seal housing (39), a movable contact (41) and a fixed contact (49) that are located within the seal tube (38), wherein an upper end of the movable contact (41) is connected to a lantern ring (43) made of a ferromagnetic material; and an upper end of the lantern ring (43) is close to an upper surface of the contact (46).

5. The road contact power supply device according to claim 4, wherein an elastic sealing sleeve (34), a compression spring (26), a fixed contact carrier (53) and a pedestal (35) are arranged in the seal tube (38); at least one of the elastic sealing sleeve (34) and the compression spring (26) supports the pedestal (35); the movable contact (41) is shaped like a sleeve cover; the pedestal (35) props up the seal housing (39), the fixed contact carrier (53) and the movable contact (41); a large rubber ring (40) for sealing is arranged between the seal housing (39) and the seal tube (38); and an inner wall of the large rubber ring (40) is fixed to an outer wall of the seal housing (39).

6. The road contact power supply device according to claim 5, wherein the fixed contact carrier (53) and a conductive column (28) are arranged in the seal housing (39); and the seal housing (39), a head end of the fixed contact carrier (53), the fixed contact (49), the elastic sealing sleeve (34), and the conductive column (28) define a gas-tight space which is filled with an inert gas.

7. The road contact power supply device according to claim 6, wherein an electrical contact (27), an upper cable clamp (25), a lower cable clamp (31) and the cable (32) are arranged below the conductive column (28); the conductive column (28) is connected to the surface of a core wire of the cable (32) through the electrical contact (27); and the conductive column (28) is in movable fit with the sleeve cover-shaped movable contact (41) for electrical conduction.

8. The road contact power supply device according to claim 4, wherein the fixed contact (49) is in spherical contact with the contact (46); an elastic insulating sealing ring (45) is connected to the periphery of the contact (46); an upper end of the elastic insulating sealing ring (45) is in a shape of an annular plane which is coplanar with an upper end face of the contact (46).
